(19) Europäisches Patentamt
European Patent Office
Office européen des brevets

(11) Veröffentlichungsnummer: **0 413 167 A1**

(12) # EUROPÄISCHE PATENTANMELDUNG

(21) Anmeldenummer: **90114018.6**

(22) Anmeldetag: **21.07.90**

(51) Int. Cl.[5]: **C08K 5/5313**, C08K 13/02, C08L 77/00

(30) Priorität: **04.08.89 DE 3925791**

(43) Veröffentlichungstag der Anmeldung:
**20.02.91 Patentblatt 91/08**

(84) Benannte Vertragsstaaten:
**DE FR GB IT**

(71) Anmelder: **BAYER AG**

**D-5090 Leverkusen 1 Bayerwerk(DE)**

(72) Erfinder: **Fuhr, Karl, Dr.**
**Krüllsdyk 55**
**D-4150 Krefeld(DE)**
Erfinder: **Müller, Friedemann, Dr.**
**Am Steinacker 5**
**D-4040 Neuss(DE)**
Erfinder: **Ott, Karl-Heinz, Dr.**
**Paul-Klee-Strasse 54**
**D-5090 Leverkusen 1(DE)**
Erfinder: **El-Sayed, Aziz, Dr.**
**Saarlauterner Strasse 39**
**D-5090 Leverkusen 1(DE)**
Erfinder: **Müller, Peter-Rolf, Dr.**
**Paul-Klee-Strasse 76**
**D-5090 Leverkusen 1(DE)**
Erfinder: **Wandel, Martin, Dr.**
**Donatusstrasse 17**
**D-4047 Dormagen(DE)**

(54) **Flammgeschützte, nicht tropfende Polyamidformmassen.**

(57) Gegenstand der Erfindung sind flammgeschützte, nicht tropfende Polyamidformassen, die in bestimmten Mengen

A) Phosphinsäureester von Polyphenolen auf Basis Phenol-Aldehyd/Keton-Kondensaten,

B) Antidripping-Mittel (wie Polyfluorethylenpolymerisate oder Aramide),

C) Zinkborat,

D) Thermoplaste mit überwiegend aromatischer Hauptkette und hoher Wärmeformbeständigkeit (Vicat B ≧ 180 °C), gegebenenfalls Verstärkungsmittel und weitere Additive für Flammschutz sowie für Verarbeitung enthalten.

EP 0 413 167 A1

# FLAMMGESCHÜTZTE, NICHT TROPFENDE POLYAMIDFORMMASSEN

Gegenstand der Erfindung sind flammgeschützte, nicht tropfende Polyamidformmassen, die in bestimmten Mengen

A) Phosphinsäureester von Polyphenolen auf Basis Phenol-Aldehyd/Keton-Kondensaten,

B) Antidripping-Mittel (wie Polyfluorethylenpolymerisate oder Aramide),

C) Zinkborat,

D) Thermoplaste mit überwiegend aromatischer Hauptkette und hoher Wärmeformbeständigkeit (Vicat B ≧ 180 °C), gegebenenfalls Verstärkungsmittel und weitere Additive für Flammschutz sowie für Verarbeitung enthalten.

Ester von Phosphinsäuren und Alkoholen bzw. Phenolen sind bekannt. Auch wurden sie bereits als Flammschutzmittel vorgeschlagen. In der DE-OS 3 219 047 werden Phosphinsäureester von zweiwertigen Alkoholen oder ein-bzw. mehrwertigen Phenolen als Flammschutzmittel für Formmassen aus Polyphenylenoxid und schlagzäh modifiziertem Polymerisat einer monovinylaromatischen Verbindung beansprucht. Als mehrwertige Phenole werden speziell Resorcin, Brenzcatechin und Phloroglucin angegeben.

Phosphinsäureester von Phenol-Aldehyd/Keton-Kondensaten werden nicht erwähnt. Auch ist die Verwendung von Phosphinsäureestern der beanspruchten Art als Flammschutzmittel für Polyamid im Zusammenwirken mit Antidripping-Mitteln (wie Polyfluorethylenpolymerisaten oder Aramid) und Zinkborat nicht vorbeschrieben.

Gegenstand der Erfindung sind flammgeschützte, nicht tropfende Polyamidformmassen, die in 100 Gew.-Teilen dieser Polyamidformmassen folgende Zusätze enthalten:

A) 3 bis 20 Gew.-%, vorzugsweise 5 bis 15 Gew.%, Phosphinsäureester von Polyphenolen der Formel (I)

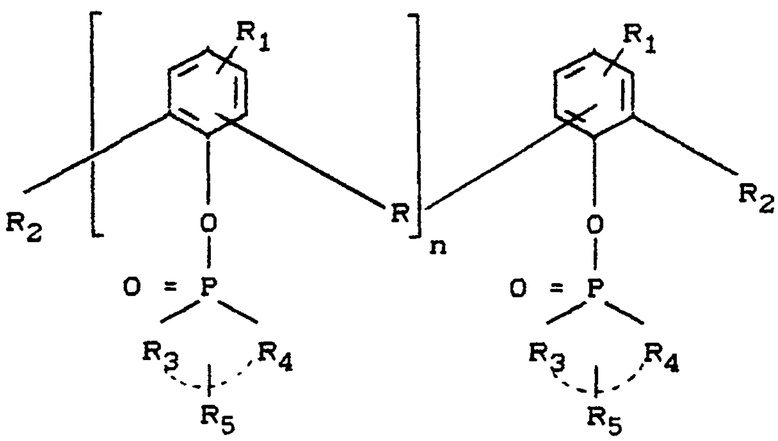

(I),

worin

n eine ganze Zahl zwischen 1 und 20, bevorzugt zwischen 1 und 10,

R eine Alkylengruppe mit 1 bis 4 Kohlenstoffatomen, eine Cycloalkylengruppe mit 5 bis 9 Kohlenstoffatomen oder, wenn n = 1 ist, auch eine direkte Bindung, eine Sulfonyl- oder Carbonylgruppe bzw. Sauerstoff oder Schwefel,

$R_1$ und $R_2$ Wasserstoff, Halogen, Alkylgruppen mit 1 bis 12 Kohlenstoffatomen, Cycloalkyl- mit 5 bis 9 Kohlenstoffatomen, Arylgruppen mit 6 bis 10 Kohlenstoffatomen,

$R_3$ und $R_4$ Alkylgruppen mit 1 bis 4 Kohlenstoffatomen und/oder Arylgruppen mit 6 bis 10 Kohlenstoffatomen sind, wobei $R_3$ und $R_4$ im Fall von Alkylgruppen auch durch eine Einfach- oder Doppelbindung verbunden sein können und der über das Phosphoratom gebildete Ring Alkylgruppen $R_5$ mit 1 bis 4 Kohlenstoffatomen tragen kann, bedeutet,

und -R- vorzugsweise in die ortho- oder para-Stellungen der Phenolharze gebunden ist, wobei dann die Reste $R_1$ in para- oder ortho-Stellungen gebunden sind,

B) Antidripping-Mittel in einer Gesamtmenge nicht über 6 Gew.-%, vorzugsweise nicht über 3 Gew.-%, aus der Reihe von

B1) 0,1 - 3 Gew.-%, vorzugsweise 0,3 - 1,0 Gew.-%, eines Polyfluorethylenpolymerisats und/oder

B2) 0,1 - 5 Gew.-%, vorzugsweise 1 - 2,5 Gew.-%, eines Aramids,

C) 0,5 bis 15 Gew.-%, vorzugsweise 3 bis 12 Gew.-%, Zinkborat, vorzugsweise Zinkborathydrate als

Flammschutzverstärker,

D) 1 bis 30 Gew.-%, vorzugsweise 5 bis 25 Gew.-%, eines Thermoplasten mit überwiegend aromatischer Hauptkette und mit hoher Warmeformstabilität (Vicat B ≧ 180 ° C)

sowie gegebenenfalls weitere Zusatzstoffe aus der Reihe

E) 0 - 40 Gew.-%, vorzugsweise 15 bis 30 Gew.-%, anorganische Füllstoffe und/oder Verstärkungsmittel und/oder Pigmente,

F) 0 bis 30 Gew.-%, vorzugsweise 5 bis 20 Gew.-%, weitere Flammschutzmittel, wie Stickstoff-, Halogen- und/oder andere Phosphorverbindungen und

G) 0 bis 10 Gew.-%, vorzugsweise 1 bis 5 Gew.-%, Verarbeitungshilfsmittel

H) 0 bis 20 Gew.-% übliche Zusatzmittel für Polyamide wie UV-, Licht- und Thermostabilissatoren, bekannte Schlagzähigkeitsverbesserer/Verträglichkeitsverbesserer.

Die Zusatzmengen in der Polyamidmischung sollen in bevorzugter Ausführungsform dabei insgesamt 65 Gew.-%, vorzugsweise 60 Gew.-%, insbesondere 55 Gew.-%, nicht übersteigen; dabei sollen auch die Teilmengen gegebenenfalls beschränkt sein; so sollen die Gesamtmengen der Flammschutzzusätze (A + B + C + D + F) 50 Gew.-%, vorzugsweise 45 Gew.-%, insbesondere 40 Gew.-%, die Gesamtmenge an Zusatzstoffen (G + H) 25 Gew.-% und die Gesamtmengen an E) 40 Gew.-% der Polyamidmischung nicht übersteigen.

Die erfindungsgemäß eingesetzten Phosphinsäureester (I) sind Alkyl- und Arylphosphinsäureester von Bisphenolen und Polyphenolen, wie sie durch Kondensationsprodukte von Phenolen mit Aldehyden oder Ketonen dargestellt werden. Bevorzugt werden dabei Alkyl- und Arylphosphinsäureester von Bisphenolen und höhermolekularen Phenol-Formaldehyd-Kondensationsprodukten (generell als Novolake bezeichnet) der Formel (II) und (III), wobei Formel (II) die Phosphinsäureester von Bisphenolen und Formel (III) die von Novolaken (n ≧ 2), vorzugsweise 3-8, darstellt

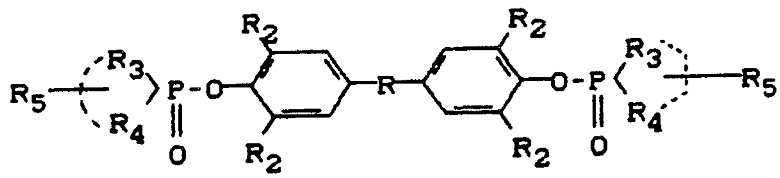

(II)

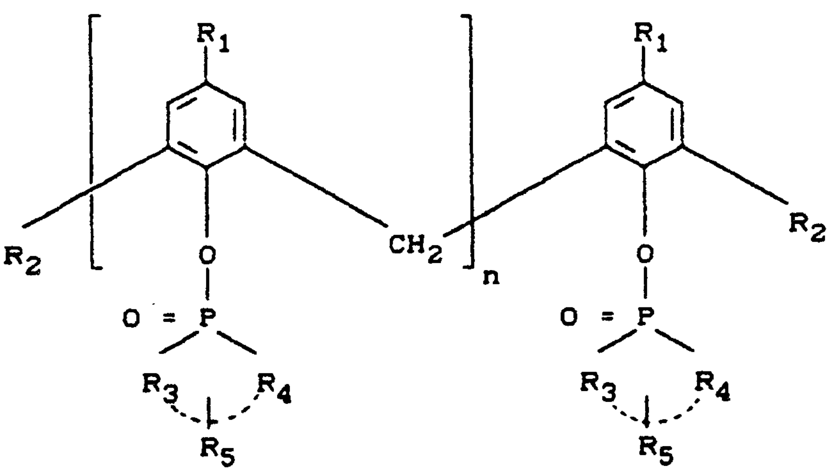

(III)

und wobei

n eine ganze Zahl zwischen 2 und 15, bevorzugt zwischen 2 und 10,

R eine einfache Bindung, eine Methylen-, Isopropylidengruppe, Sauerstoff, Schwefel, eine Sulfonyl-oder Carbonylgruppe,

$R_1$ Wasserstoff, Halogen oder eine Alkylgruppe mit 1 bis 12 Kohlenstoffatomen,

$R_2$ Wasserstoff, Halogen oder eine Alkylgruppe mit 1 bis 4 Kohlenstoffatomen,

$R_3$ und $R_4$ Methyl-, Ethyl-, Phenylgruppen oder gemeinsam die Butyliden- bzw. $R_5$-Alkyl-butylidengruppe darstellen.

Ganz besonders bevorzugt sind Verbindungen der Formel (IV) und (V)

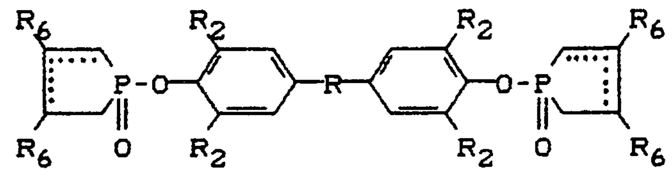

(VI)

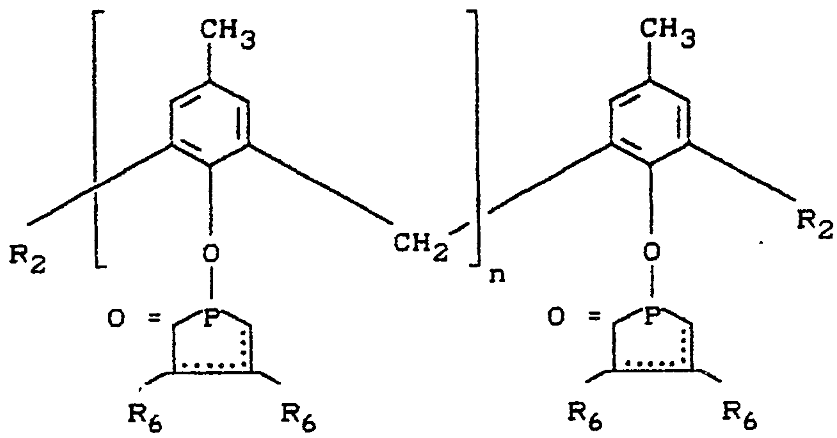

(V),

worin

n eine ganze Zahl zwischen 2 und 8 ist,

R die oben beschriebene Bedeutung hat,

$R_2$ Wasserstoff- oder Methylgruppen und

$R_6$ ebenfalls Wasserstoff oder Methylgruppen darstellen.

Polyamide im Sinne der Erfindung sind alle amorphen und/oder teilkristallinen, überwiegend aliphatische/cycloaliphatische, thermoplastische Polyamide, die nach dem bekannten Polykondensations- und/oder Polymerisationsprozeß aus überwiegend aliphatischen/cycloaliphatischen Diaminen und Dicarbonsäuren und/oder Lactamen ab 4 Methylengruppen im Lactamring hergestellt werden. Ausgangsmaterialien sind aliphatische oder gemischt aliphatische aromatische Dicarbonsäuren mit unter 50 Gew.-% aromatischen Bestandteilen, wie Adipinsäure, 2,2,4- und 2,4,4-Trimethyladipinsäure, Azelainsäure, Sebazinsäure, Decandicarbonsäure, Dodecandicarbonsäure, Cyclohexandicarbonsäure, Hexahydroterephthalsäure, Isophthalsäure und Terephthalsäure, sowie aliphatische und aromatische Diamine, wie Hexamethylendiamin, 2,2,4-und 2,4,4-Trimethylhexamethylendiamin, Diamino-dicyclohexylmethanisomere, Diamino-dicyclohexylpropanisomere und Isophorondiamin(isomere), Xylylendiamine, Aminocarbonsäuren wie ε-Aminocapronsäure und ω-Aminocarbonsäuren wie ω-Aminoundecansäure bzw ω-Aminolaurinsäure.

Auch Copolyamide aus mehreren der genannten Monomeren können eingesetzt werden.

Bevorzugt sind Polyamid-6, Polyamid-6,6, Polyamid-6,10, Polyamid-6,12, Polyamid-11, Polyamid-12, Polyamid-6T6 oder 6I6 mit Aromatenanteilen unter 50 Gew.-%. Sie besitzen vorzugsweise eine relative Viskosität (gemessen an einer 1 gew.-%igen Lösung in m-Kresol bei 25° C von 2,0 bis 5,0, bevorzugt von 2,5 bis 4,0).

Die Polyamide lassen sich nach bekannten Verfahren herstellen (siehe Kunststoff-Handbuch, Band VI, Seiten 11 bis 198, Carl-Hanser-Verlag, München, 1966).

A) Phosphinsäureester

Die erfindungsgemäß eingesetzten Phosphinsäureester sind die Dialkyl-, Diaryl- und Alkylarylphosphinsäureester von Bis- und Polyphenolen (Novolaken). Da die Phosphinsäuren nicht direkt in die erfindungsgemäßen Ester umgewandelt werden können, sind ihre reaktiveren Derivate zu verwenden. Diese sind die Säurechloride, die durch Abspaltung von Chlorwasserstoff, und Phenylester (ebenfalls aus den Säurechloriden), die durch Abspaltung von Phenol (Umesterung) mit den Polyphenolen zu den erfindungsgemäßen Estern umgesetzt werden.

Beispiele für Phosphinsäuren sind Dimethylphosphinsäure, Methylethylphosphinsäure, Diethylphosphinsäure, Methylphenylphosphinsäure, Ethylphenylphosphinsäure, Diphenylphosphinsäure, Di-p-Tolylphosphinsäure und Phenylnaphthylphosphinsäure sowie 1-Hydroxy-1-oxo-phospholin, 1-Hydroxy-1-oxo-3-methyl-

phospholin und 1-Hydroxy-1-oxo-3,4-dimethyl-phospholin.

Herstellungsverfahren für Phosphinsäuren und ihre Derivate wie Chloride und Phenylester sind bekannt und in der Literatur zusammengestellt (Methoden der organischen Chemie (Houben-Weyl), Band XII/1, Seiten 217 bis 266, und Band E2, Seiten 123 bis 221).

Die Umsetzung der Phosphinsäurechloride mit Bis-und Polyphenolen erfolgt bei Temperaturen von 180 bis 200 °C unter Abspaltung von Chlorwasserstoff recht langsam. Unter Mitverwendung von Katalysatoren wie Magnesiumchlorid gelingt dieses bereits bei niedrigeren Temperaturen und in kürzeren Zeiten. Bei niedrigeren Temperaturen müssen bei der Veresterung von Novolaken aus Gründen der Viskosität inerte, hochsiedende Lösungsmittel mitverwendet werden. Üblicherweise werden als Katalysatoren Magnesiumchlorid oder tertiäre Amine eingesetzt. Bei dem wesentlich schneller ablaufenden Umesterungsverfahren wird als Katalysator ebenfalls Magnesiumchlorid verwendet. Die Temperaturen liegen wieder bei 200 °C.

Bisphenole und Novolake werden nach bekannten Verfahren hergestellt (siehe für Bisphenole: H. Schnell und H. Krimm, Angew. Chemie 75 (1963), 662 bis 668; für Novolake: Methoden der organischen Chemie (Houben-Weyl), Band XIV/2, Seiten 193 bis 292, und Ullmanns Encyclopädie der Technischen Chemie, 4. Auflage, Band 18, Seiten 245 bis 257).

Als geeignete Bisphenole seien erwähnt:
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfone
sowie deren kernalkylierte und kernhalogenierte Derivate.

Die wichtigsten Bisphenole im Sinne der Erfindung sind: 4,4′-Dihydroxydiphenyl, 2,2-Bis-(4-hydroxyphenyl)-propan, Bis-(4-hydroxyphenyl)-methan, 4,4′-Dihydroxybenzophenon, 4,4′-Dihydroxydiphenylether, 4,4′-Dihydroxydiphenylsulfid, 4,4′-Dihydroxydiphenylsulfon sowie deren kernsubstituierte Derivate, wobei als Substituenten vorzugsweise $CH_3$, Cl oder Br in Frage kommen. Ein kernmethyliertes Derivat ist 2,2-Bis-(4-hydroxy-3,5-dimethylphenyl)-propan.

Besonders bevorzugte Diphenole sind 2,2-Bis-(4-hydroxyphenyl)-propan, 4,4′-Dihydroxydiphenyl, 4,4′-Dihydroxydiphenylether, 4,4′-Dihydroxydiphenylsulfon, 4,4′-Dihydroxybenzophenon und 2,2-Bis-(4-hydroxy-3,5-dimethylphenyl)-propan.

Es können auch Gemische von Diphenolen eingesetzt werden.

Geeignete Novolake sind Kondensationsprodukte aus Formaldehyd und Phenolen der allgemeinen Formel (VII)

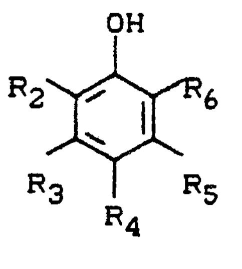

(VII),

worin
$R_2$ und $R_6$ Wasserstoffatome bezeichnen und $R_3$, $R_4$ und $R_5$ wahlweise gleich Wasserstoff, Halogen oder $C_1$-$C_{20}$-Alkyl-, Cycloalkyl-, $C_6$-$C_{10}$-Aryl-Gruppen sein können oder worin $R_2$ und $R_4$ Wasserstoffatome bezeichnen und $R_3$, $R_5$ und $R_6$ gleich den obengenannten Resten sein können.

Charakteristische Beispiele für Phenole sind, ohne damit eine Einschränkung zu treffen, Phenol, o-Kresol, m-Kresol, p-Kresol, 2,5-Dimethyl-, 3,5-Dimethyl, 2,3,5-Trimethyl-, 3,4,5-Trimethyl-, p-t-Butyl-, p-n-Octyl-, p-Stearyl-, p-Phenyl-, p-(2-Phenylethyl)-, o-Isopropyl-, p-Isopropyl-, m-Isopropylphenol sowie zahlreiche andere Phenole.

Bevorzugt eingesetzt werden Phenol, o-Kresol, m-Kresol, p-Kresol, p-t-Butylphenol und o-t-Butylphenol und p-Octylphenol.

Es können aber auch Gemische aus diesen Phenolen eingesetzt werden.

Bevorzugt eingesetzte Novolake sind demnach, ohne damit eine Einschränkung zu treffen:
Phenol/Formaldehyd-Novolak,
o-Kresol/Formaldehyd-Novolak,
m-Kresol/Formaldehyd-Novolak,

p-Kresol/Formaldehyd-Novolak,
t-Butylphenol /Formaldehyd-Novolak,
p-Octylphenol/Formaldehyd-Novolak.

Besonders bevorzugt wird der p-Kresol/Formaldehyd-Novolak.

B) Antidripping-Mittel

Die erfindungsgemäß geeigneten Polyfluorethylenpolymerisate B1) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere, Tetrafluorethylen-Difluorethylen-Copolymere oder Tetrafluorethylencopolymerisate mit geringen Mengen fluorfreier, copolymerisierbarer, ethylenisch ungesättigter Monomerer. Die Polymerisate sind bekannt. Sie können in feinteiliger Form, gewöhnlich als Pulver, verwendet werden. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drüoken von 7 bis 71 kg/cm$^2$ und bei Temperaturen von 0 bis 200 °C, vorzugsweise bei Temperaturen von 20 bis 100 °C (nähere Einzelheiten siehe beispielsweise US-Patent 2 393 967).

Die erfindungsgemäß geeigneten Polyfluorethylenpolymerisate sollen vorzugsweise Gewichtsmittelmolekulargewichte $\overline{M}_w$ zwischen $10^5$ und $10^6$ haben.

Die Polyfluorethylenpolymerisate werden bevorzugt in nicht gesinterter Form zugesetzt.

Durch den Zusatz von Polyfluorethylenpolymerisaten wird insbesondere das Abtropfen der Formmassenschmelze während des Brandvorganges reduziert oder ganz verhindert.

Als Antidripping-Mittel geeignete aromatische Polyamide B2) sind üblicherweise aus aromatischen Arylendicarbonsäuren und aromatischen Diaminen durch Lösungskondensation oder durch Grenzflächenkondensation hergestellt (Kirk-Othmer, Ecyclopedia of Chemical Technology, Third Edition, Volume 3, Seiten 213 bis 242).

Arylendicarbonsäuren sind insbesondere Phthalsäure, Isophthalsäure und Terephthalsäure.

Aromatische Diamine sind beispielsweise: o-Phenylendiamin, m-Phenylendiamin, p-Phenylendiamin, Diaminodiphenyle, in denen die Phenylbausteine über Heteroatome oder Gruppen verknüpft sind, entsprechend der Formel

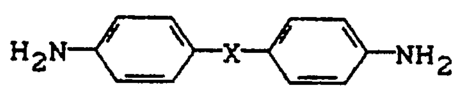 ,

X = -O-, -S-, $-SO_2-$, -CO-, $-CH_2-$, $-C(CH_3)_2-$, $-CF_2-$.

Ferner sind als Antidripping-Mittel geeignet Polyimidamide wie:

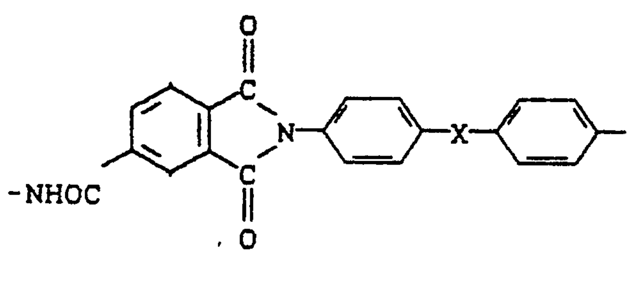 ,

X = $-CH_2-$, -O-.

Ferner sind Aramide geeignet, die Heterocyclenstrukturen in der Hauptkette enthalten, wie Oxidazol-, Triazol-, Bithiazol-, Benzimidazol-, Hydantoin- und Chinazolon-Strukturen (siehe Ullmanns Encyklopädie der Technischen Chemie, 4. Auflage, Band 11, Seiten 345 bis 350) und gegebenenfalls über Dicarbonsäuren, Diamine oder Aminocarbonsäuren aufgebaut wurden.

Auch sind solche aromatische Polyamide geeignet, die zu über 50 Gesamtgewichtsprozent aus vorgenannten aromatischen Polyamiden bestehen und deren Rest (cyclo)-aliphatische Carbonsäuren und/oder (cyclo)-aliphatische Diamine sind. Als aliphatische Dicarbonsäuren können beispielsweise eingesetzt werden:

Adipinsäure, 2,2,4- und 2,4,4-Trimethyladipinsäure, Azelainsäure, Sebazinsäure, Decandicarbonsäure und Dodecandicarbonsäure.

Als aliphatische Diamine können beispielsweise eingesetzt werden:

Hexamethylendiamin, 2,2,4- und 2,4,4-Trimethylhexamethylendiamin, Diamino-dicyclchexylmethan-Isomere, Diamino-dicyclohexylpropan-Isomere, Isophorondiamine und die Xylylendiamine.

C) Zinkborate (Hydrate)

Zinkborate (Hydrate) können Produkte unterschiedlicher Zusammensetzung sein (siehe Ullmann's Encyclopedia of Industrial Chemistry, 5. Edition, Volume A4, Page 276). Als Flammschutzmittel für Polyamidformmassen ist besonders $2ZnO*3B_2O_3*3.5H_2O$ wegen seiner Stabilität bis in Temperaturbereiche von 290-300 °C geeignet.

D) Aromatische Thermoplasten

Als erfindungsgemäße Thermoplasten mit überwiegend aromatischer Hauptkette und mit hoher Wärmeformbeständigkeit (Vicat B $\geq$ 180 °C) werden u.a. Polyalkylencarbonsäureester, Polysulfone, Polyethersulfone, Polyketone, Polyetherketone, Polyphenylenoxide, Polyarylensulfide eingesetzt. Diese Thermoplasten werden nach literaturbekannten Verfahren hergestellt.

E) Verstärkungsmittel

Erfindungsgemäß gegebenenfalls einsetzbare anorganische Verstärkungsmittel E) umfassen alle bekannten für die Verstärkung von Polyamiden bekannten Mittel. Zum Beispiel werden genannt: Glasfasern, Glaskugeln und/oder mineralische Füllstoffe, wie in Katz und Milewski, "Handbook of Fillers and Reinforcements for Plastics", Nostrand-Verlag, 1978, beschrieben.

Bevorzugt werden als anorganische Verstärkungsmittel Glasfasern eingesetzt. Die eingesetzten Glasfasern besitzen im allgemeinen einen Durchmesser von etwa 6 bis 15 µm, bevorzugt 8 bis 13 µm, und ein Längen- zu Dicken-Verhältnis von größer als 45, bevorzugt 50 bis 200.

Als weitere Füll- und Verstärkungsstoffe kommen Mikroglaskugeln, Kohlefasern, Kreide, Quarz wie beispielsweise Novaculit und Silikate wie Asbest, Feldspat, Glimmer, Talkum, Wollastonit sowie Kaolin in kalzinierter und nicht kalzinierter Form sowie als weitere Füllstoffe und Pigmente Erdalkalimetallcarbonate, Erdalkalimetalloxide, Titandioxid und/oder Zinksulfid in Frage. Die eingesetzen mineralischen Füllstoffe besitzen mittlere Teilchen durchmesser von weniger als 20 µm, bevorzugt weniger als 10 µm, insbesondere 2 bis 8 µm. Sie können in geeigneter Weise oberflächenmodifiziert sein, z.B. mit Aminoalkylsilan behandelt sein.

F) Weitere Flammschutzmittel

Für die Flammschutzmittelkombinationen geeignete organische Halogenverbindungen sind generell bekannt, beispielsweise halogenierte Diels-Alder-Addukte, z.B. Hexachlorcyclopentadien, Hexachlorendomethylentetrahydrophthalsäure und deren Anhydrid, Bis-(hexachlorocyclopentadien)-cyclooctan (Dechlorane Plus der Occidental Chemical Corp., USA), sowie Tetrachlorphthalsäureanhydrid.

Weiter kommen beispielsweise als bromhaltige Flammschutzmittel in Frage: Hexabrombenzol, Pentabromtoluol, Octa-und Decabromdiphenyl, Octa- und Decabromdiphenylether, Hexabrom-bis-phenoxyethan, Ethylen-bis-tetrabromphthalimid und deren Gemische, sowie bromierte Polystyrole (Pyro-Check-Typen der Ferro Corp., USA) und bromiertes Polyphenylenoxid (Great Lakes PO-64 P der Great Lakes Chem. Corp., USA).

Für die Flammschutzmittelkombinationen eignen sich besonders organische Phosphorverbindungen wie Phosphate und Phosphonate. Bevorzugt sind aromatische Phosphate, z.B. Triphenylphosphat und Dikresylphe nylphosphat, außerdem Phosphonate wie Diphenylmethylphosphonat, Dikresylphenylphosphonat sowie Phosphorsäure- und Phosphonsäureester von Novolaken. Außerdem kann roter Phosphor (vorzugsweise in üblicher Weise stabilisiert), rein oder in gekapselter Form, als Flammschutzmittel in der Kombination Verwendung finden.

Als organische Stickstoffverbindungen sind für die Flammschutzmittelkombinationen beispielsweise Melamin, Cyanursäure und Salze dieser Komponenten wie Melamincyanurat, -borat und/oder -phosphat geeignet.

Als weitere Flammschutzmittel können Metalloxide, z.B. Antimon(III)-oxid, Blei(VI)-oxid, Cer(IV)-oxid, Kupfer(II)-oxid, Molybdän(VI)-oxid, Vanadium(V)-oxid, Wismut(III)-oxid, Wolfram(VI)-oxid, Zinn(IV)-oxid und Zirkon(IV)-oxid sowie deren Mischungen zugesetzt werden.

G) Verarbeitungshilfsmittel

Als Verarbeitungshilfsmittel (F) können den erfindungsgemäßen Formmassen Entformungsmittel, Stabilisatoren, Fließhilfsmittel und Weichmacher zugesetzt werden.

Als Entformungsmittel können Esterwachse, z.B. Montanwachs, Amidwachs wie Rhenax$^R$ und/oder Oligo ethylene verwendet werden. Als Weichmacher kommen z.B. aliphatische oligomere Polyester in Frage (s. EP 29 931 und DE 2 706 128).

H. Schlagzähmodifikatoren

Als Schlagzähmodifikatoren sind insbesondere Kautschuke wie Butadien-Acrylnitril-Copolymerisate, Butadien-Styrol-Copolymerisate, Butadien-Styrol-Blockcopolymerisate, Alkylacrylatkautschuke, EP-bzw. EPDM-Kautschuksysteme sowie Siliconkautschuke geeignet. Vorzugsweise werden als Kautschukkomponente Pfropfkautschuke eingesetzt, bei denen Vinylmono- oder Copolymerisate auf einem der vor genannten Kautschuksysteme aufgepfropft sind, wobei die Glastemperatur der Pfropfgrundlage unterhalb -10 °C liegen sollten. Bevorzugt enthalten sie auch Haftgruppen zum Polyamid, z.B. Carboxylgruppen oder Anhydridgruppen. Besonders bevorzugt sind Pfropfkautschuke vom Typ MBS- bzw. MABS- bzw. EP- bzw EPDM- oder EBDM-Kautschuke, (E = Ethylen, B = Butylen, P = Propylen), auf die in kleinen Anteilen Maleinsäureanhydrid bzw. Styrol-Maleinsäureanhydrid aufgepfropft wurden. Weitere Beispiele sind in der US 4 174 358, US 3 845 163, US 3 668 274 und US 4 174 358 aufgeführt.

Die Herstellung der Mischungen aus thermoplastischen Polyamiden, Phosphinsäureestern von Polyphenolen, Polyfluorethylenpolymerisaten und/oder Aramiden, Thermoplasten mit überwiegend aromatischer Hauptkette und hoher Wärmeformbeständigkeit (Vicat B $\geqq$ 180 °C), anorganischen Verstärkungsmitteln, Füllstoffen und Pigmenten, weiteren Flammschutzmitteln sowie Verarbeitungshilfsmitteln kann in denüblichen Mischaggregaten, wie Walzen, Knetern, Ein-und Mehrwellenextrudern, erfolgen. Die Verarbeitungshilfsmittel können als Konzentrate in thermoplastischem Polyamid in Granulatform oder als Pulvermischung bei der Compoundierung der Komponenten zudosiert werden. Die Temperatur bei der Herstellung der Mischungen und der Formkörper aus ihnen soll üblicherweise bei 260 bis 285 °C liegen.

Das Herstellungsverfahren kann sowohl diskontinuierlich als auch kontinuierlich unter Bedingungen durchgeführt werden, bei denen eine Oxidation weitgehend ausgeschlossen ist, d.h. vorzugsweise unter Schutzgasatmosphäre. Als Schutzgas eignen sich z.B. Stickstoff, Kohlendioxid und/oder Argon.

Die flammfest ausgerüsteten Polyamid-Formkörper sind besonders für den Einsatz auf dem Elektro- und Automobilsektor geeignet und finden beispielsweise zur Herstellung von Gehäusen und Abdeckungen für technische Geräte wie Elektrohaushaltsgeräte und für Automobilteile Verwendung.

Beispiele

A. Eingesetzte Komponenten

I. Polyamid 66 mit einer relativen Viskosität von 3,0, gemessen an einer einprozentigen Lösung in m-Kresol bei 25 °C, als Granulat;

II. Umsetzungsprodukt (Ester) aus 4,4'-Dihydroxydiphenylmethan und 1-Chlor-1-oxo-3-methyl-phospholin (Molverhältnis 1:2);

III. Methylethylphosphinsäureester eines Novolaks aus p-Kresol und Formaldehyd, OH-Zahl 468, Zahl der Phenolkerne (Kernzahl) etwa 5;

IV. Umsetzungsprodukt (Ester) aus Novolak nach III. und 1-Chlor-1-oxo-phospholin;

V. Umsetzungsprodukt (Ester) aus Novolak nach III. und 1-Chlor-1-oxo-3-methylphospholin;

VI. Umsetzungsprodukt (Ester) aus Novolak nach III. und Triphenylphosphat, Schmelzbeginn 75 °C (Kofler-Heizbank);
VII. Polytetrafluorethylen-Pulver, Hostaflon TF 2027 der Firma Hoechst AG;
VIII. Aramidfaser, Kevalar 29 der Firma DuPont de Nemours, USA;
IX. Zinkborat (Hydrat), $2ZnO*3B_2O_3*5H_2O$, Firebrake ZB der U.S.Borax & Chemical Corp., USA;
X. Polyphenylensulfid,
XI. Polyethersulfon aus Bisphenol A und 4,4′-Dihydroxydiphenylsulfon,
XII. Poly-2,6-dimethyl-phenylenoxid,
XIII. Kurzglasfaser, Typ CS 7919 der Bayer AG;
XIV. Bis-(hexachlorocyclopentadien)-cyclooctan, Dechlorane Plus 25 der Occidental Chemical Corp., USA;
XV. Melamincyanurat.

B. Herstellung der verwendeten Phosphinsäureester-Additive

1) Phosphinsäureester aus 1-Chlor-1-oxo-3-methylphospholin und Bisphenol F (4,4′-Dihydroxydiphenylmethan)

200,2 g (1 Mol) Bisphenol F werden in einem 1-l-Kolben mit Heizbad, Rührer, Gaseinleitungsrohr für Stickstoff, Tropftrichter und Rückflußkühler unter Stickstoff auf 170 bis 180 °C erhitzt. Dann werden in 2 Stunden 301,1 g (2 Mol) 1-Chlor-1-oxo-3-methylphospholin zugetropft. Nach 18 Stunden ist die Chlorwasserstoffentwicklung abgeschlossen.

Nach Abkühlen wird der noch warme Ester in 1 l Methylenchlorid aufgenommen und mit Wasser chloridfrei gewaschen. Nach Trocknen der Methylenchloridlösung wird das Natriumsulfat abfiltriert und die Lösung eingeengt. Die Ausbeute beträgt 379,1 g = 88,5 % der Theorie. Das Produkt ist harzig. Der Phosphorgehalt liegt bei 13,8 % (theoretisch 14,5 %), die OH-Zahl bei < 10.

2) Phosphinsäureester aus Methylethylphosphinsäurechlorid und einem Novolak aus p-Kresol

239,7 g (2 Gramm äquiv.) eines Novolaks aus p-Kresol und Formaldehyd (OH-Zahl 468, Kernzahl ca. 5) und 5,7 g (0,06 Mol) Magnesiumchlorid werden in einem 2-l-Kolben mit Heizbad, Rührer, Gaseinleitungsrohr für Stickstoff, Tropftrichter und Rückflußkühler unter Stickstoff auf 190 bis 200 °C erhitzt. Dann werden in 1 Stunde 253,1 g (2 Mol) Methylethylphosphinsäurechlorid zugetropft. Nach 72 Stunden ist die Chlorwasserstoffentwicklung abgeschlossen.

Nach Abkühlen wird der noch warme Ester in 2 l Methylenchlorid aufgenommen und mit Wasser chloridfrei gewaschen. Nach Trocknen der Methylenchloridlösung wird das Natriumsulfat abfiltriert und die Lösung eingeengt. Die Ausbeute beträgt 402,4 g = 95,8 % der Theorie. Der Erweichungsbeginn liegt bei 98 °C auf der Kofler-Heizbank, der Phosphorgehalt bei 13,4 % (theoretisch 14,7 %) und die OH-Zahl bei 0.

3) Phosphinsäureester aus 1-Chlor-1-oxophospholin und einem Novolak aus p-Kresol

240,3 g (2 Gramm äquiv.) eines Novolaks aus p-Kresol und Formaldehyd (OH-Zahl 469, Kernzahl ca. 5) und 273,1 g (2 Mol) 1-Chlor-1-oxo-phospholin werden wie unter 2 zur Umsetzung gebracht. Die Aufarbeitung erfolgt ebenfalls wie unter 2.
Die Ausbeute beträgt 423,2 g = 96,1 % der Theorie. Der Erweichungsbeginn liegt bei 134 °C der Phosphorgehalt bei 13,1 % (theoretisch 14,1 %) und die OH-Zahl bei 0.

4) Phosphinsäureester aus 1-Chlor-1-oxo-3-methylphospholin und einem Novolak aus p-Kresol

240,3 g (2 Gramm äquiv.) eines Novolaks aus p-Kresol und Formaldehyd (OH-Zahl 468, Kernzahl ca. 5) und 301,1 g (2 Mol) 1-Chlor-1-oxo-3-methyl-phospholin werden wie unter 2 zur Umsetzung gebracht. Die Aufarbeitung erfolgt ebenfalls wie unter 2.

Die Ausbeute beträgt 437,1 g = 93,3 % der Theorie. Der Erweichungsbeginn liegt bei 136 °C, der Phosphorgehalt bei 12,6 % (theoretisch 13,2) und die OH-Zahl bei 0.

5) Phosphorsäureester aus Triphenylphosphat und einem Novolak aus p-Kresol

359,6 g (3 Gramm äquiv.) eines Novolaks aus p-Kresol und Formaldehyd (OH-Zahl 468, Kernzahl ca. 5), 652,6 g (2 Mol) Triphenylphosphat und 8,6 g Magnesiumchlorid (0,09 Mol) werden in einem 2-l-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200 ° C erhitzt. Der über die Kapillare eingeleitete Stickstoffstrom sorgt für gute Durchmischung. Anschließend werden in 1,5 Stunden bei fallendem Vakuum von 20 bis 3 mbar und Temperaturen von 200 bis 210 ° C über Kolonne und Kühler 282,3 g (3 Mol) Phenol abdestilliert. Anschließend wird 1 Stunde bei 250 ° C und einem Vakuum von 3 mbar ausgeheizt.

Nach Abkühlen wird das Reaktionsprodukt in 2 l Methylenchlorid aufgenommen und mit Wasser chloridfrei gewaschen. Nach Trocknen der Methylenchlorid-Lösung wird das Natriumsulfat abfiltriert und die Losung eingeengt. Die Ausbeute beträgt 694,9 g = 95,2 % der Theorie. Der Erweichungsbeginn liegt bei 75 ° C auf der Kofler-Heizbank, der Phosphorgehalt bei 8,4 % (theoretisch 8,5 %) und die OH-Zahl bei 0.

C. Herstellung, Verarbeitung und Prüfung der Formmassen

Die eingesetzten Komponenten werden in den in Tabelle 1 angegebenen Mengen (Angaben in Gew.-%) in einem Zweiwellenextruder geschmolzen, vermischt, zu Strängen extrudiert und granuliert. Die Herstellung der Formmassen kann beispielsweise mit einem Extruder, ZSK 32 der Firma Werner & Pfleiderer, bei Massetemperaturen von 275 bis 285 ° C und bei einer Schneckendrehzahl von 130 U/min. sowie einem Durchsatz von 8 kg/h erfolgen.

Nach ausreichender Trocknung (z.B. bis 4 Stunden bei 120 ° C) werden die Formmassen auf üblichen Spritzgußmaschinen bei Massetemperaturen von 260 ° C, einer Formtemperatur von 80 ° C und einer Schmelzestandzeit von nicht länger als 9 Minuten zu Formkörpern bzw. Normprüfstäben verspritzt und folgenden Tests unterzogen:

- Bestimmung des Phosphorgehalts (Elementaranalyse, % P),

Brandtest nach Vorschrift Underwriter Laboratories (UL 94)

Tabelle 2 zeigt die erhaltenen Prüfdaten.

Tabelle 1

| Zusammensetzung der Polyamidformmassen in Gew.-% | | | | | | | | | | | | | | | |
|---|---|---|---|---|---|---|---|---|---|---|---|---|---|---|---|
| Komponenten | I. | II. | III. | IV. | V. | VI. | VII. | VIII. | IX. | X. | XI. | XII. | XIII. | XIV. | XV. |
| Vergleichsbeispiel | | | | | | | | | | | | | | | |
| 1 | 53,0 | | | | 18,0 | | | 1,0 | 8,0 | | | | 20,0 | | |
| 2 | 51,0 | | | | 10,0 | 10,0 | | 1,0 | 8,0 | | | | 20,0 | | |
| 3 | 53,0 | | 9,0 | | | 9,0 | | 1,0 | 8,0 | | | | 20,0 | | |
| Beispiel | | | | | | | | | | | | | | | |
| 1 | 49,0 | 12,0 | | | | | | 1,0 | 8,0 | 10,0 | | | 20,0 | | |
| 2 | 49,0 | | 12,0 | | | | | 1,0 | 8,0 | 10,0 | | | 20,0 | | |
| 3 | 49,0 | | | 12,0 | | | | 1,0 | 8,0 | 10,0 | | | 20,0 | | |
| 4 | 49,0 | | | | 12,0 | | | 1,0 | 8,0 | 10,0 | | | 20,0 | | |
| 5 | 49,0 | | | | 12,0 | | 1,0 | | 8,0 | 10,0 | | | 20,0 | | |
| 6 | 36,0 | | | | 7,5 | 7,5 | | 1,0 | 8,0 | 20,0 | | | 20,0 | | |
| 7 | 49,0 | | | | 12,0 | | | 1,0 | 8,0 | | 10,0 | | 20,0 | | |
| 8 | 36,0 | | | | 7,5 | 7,5 | | 1,0 | 8,0 | | 20,0 | | 20,0 | | |
| 9 | 39,0 | | | | 12,0 | | | 1,0 | 8,0 | | | 20,0 | 20,0 | | |
| 10 | 45,0 | | | 10,0 | | | | 1,0 | 8,0 | 10,0 | | | 20,0 | 6,0 | |
| 11 | 45,0 | | | | 10,0 | | | 1,0 | 8,0 | 10,0 | | | 20,0 | 6,0 | |
| 12 | 40,0 | | | | 7,5 | 7,5 | | 1,0 | 8,0 | 10,0 | | | 20,0 | | 6,0 |

Tabelle 2

| Prüfdaten | | | | |
|---|---|---|---|---|
| | | Gew.-% Phosphor | Tropfverhalten | Brandverhalten UL94/1,6 mm |
| Vergleichsbeispiel | 1 | 2,3 | tropft nicht | V-0 |
| | 2 | 2,1 | tropft nicht | V-0 |
| | 3 | 1,9 | tropft nicht | V-0. |
| Beispiel | 1 | 1,7 | tropft nicht | V-0 |
| | 2 | 1,6 | tropft nicht | V-0 |
| | 3 | 1,6 | tropft nicht | V-0 |
| | 4 | 1,5 | tropft nicht | V-0 |
| | 5 | 1,5 | tropft nicht | V-0 |
| | 6 | 1,9 | tropft nicht | V-0 |
| | 7 | 1,5 | tropft nicht | V-0 |
| | 8 | 1,6 | tropft nicht | V-0 |
| | 9 | 1,5 | tropft nicht | V-0 |
| | 10 | 1,3 | tropft nicht | V-0 |
| | 11 | 1,3 | tropft nicht | V-0 |
| | 12 | 1,6 | tropft nicht | V-0 |

Aus den Beispielen 1 bis 8 der Tabellen 1 und 2 geht hervor, daß die erfindungsgemäße Mischung an Phosphinsäureestern von Polyphenolen, Antidrippingmitteln und Zinkborat und Thermoplasten mit überwiegend aromatischer Hauptkette und mit hoher Wärmeformbeständigkeit (Vicat B $\geqq$ 180 °C) deren Polyamidmischungen einen Flammschutz gibt, der der Beurteilung V-0 nach UL94 nicht tropfend bei 1,6 mm dicken Prüfkörpern zukommt.

Die Mitverwendung von Thermoplasten mit überwiegend aromatischer Hauptkette und hoher Wärmeformbeständigkeit (Vicat B $\geqq$ 180 °C) erlaubt eine deutliche Verringerung der für V-0/1,6 mm nach UL 94 benötigten Mengen an erfindungsgemäßen phosphorhaltigen Verbindungen.

Die Mitverwendung von weiteren Phosphorverbindungen, von Halogen- und/oder Stickstoffverbindungen erlaubt eine Verringerung der für V-0/1,6 mm benötigten Menge an erfindungsgemäßen Phosphinsäureestern.

## Ansprüche

1. Thermoplastische Polyamidformmassen, enthaltend in 100 Gew.-Teilen dieser Formmassen

A) 3 bis 20 Gew-%, vorzugsweise 5 bis 15 Gew.-%, Phosphinsäureester von Polyphenolen der Formel (I)

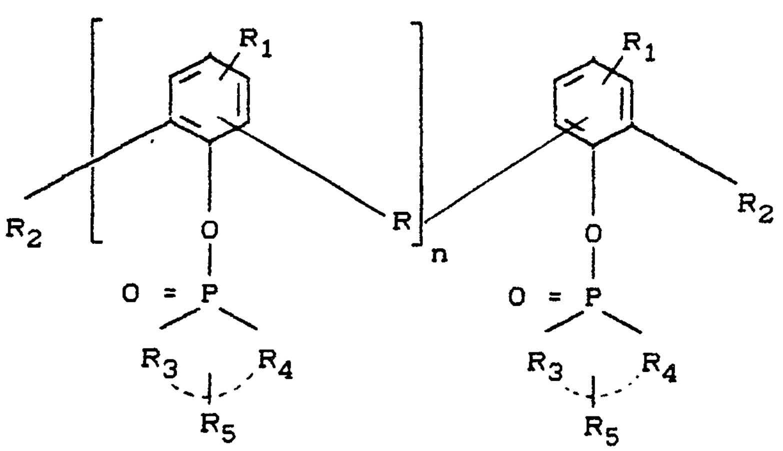

(I),

worin
n eine ganze Zahl zwischen 1 und 20, bevorzugt zwischen 1 und 10,
R eine Alkylengruppe mit 1 bis 4 Kohlenstoffatomen, eine Cycloalkylengruppe mit 5 bis 9 Kohlenstoffatomen oder, wenn n = 1 ist, auch eine direkte Bindung, eine Sulfonyl- oder Carbonylgruppe bzw. Sauerstoff oder Schwefel,
$R_1$ und $R_2$ Wasserstoff, Halogen, Alkylgruppen mit 1 bis 12 Kohlenstoffatomen, Cycloalkyl-mit 5 bis 9 Kohlenstoffatomen, Arylgruppen mit 6 bis 10 Kohlenstoffatomen,
$R_3$ und $R_4$ Alkylgruppen mit 1 bis 4 Kohlenstoffatomen und/oder Arylgruppen mit 6 bis 10 Kohlenstoffatomen sind, wobei $R_3$ und $R_4$ im Fall von Alkylgruppen auch durch eine Einfach- oder Doppelbindung verbunden sein können und der über das Phosphoratom gebildete Ring Alkylgruppen $R_5$ mit 1 bis 4 Kohlenstoffatomen tragen kann,
B) Antidripping-Mittel in einer Gesamtmenge nicht über 6 Gew.-%, vorzugsweise über 3 Gew.-%, aus der Reihe von
B1) 0,1 - 3 Gew.-%, vorzugsweise 0,3-1 Gew.-%, eines Polyfluorethylenpolymerisats und/oder
B2) 0,1 - 5 Gew.-%, vorzugsweise 1 -2,5 Gew.-%, eines Aramids,
C) 0,5 bis 15 Gew.-%, vorzugsweise 3 bis 12 Gew.-%, Zinkborat, vorzugsweise Zinkborat (Hydrate) als Flammschutz-Verstärker,
D) 1 bis 30 Gew.-%, vorzugsweise 5 bis 25 Gew.-%, eines Thermoplasten mit überwiegend aromatischer Hauptkette und mit hoher Wärmeformstabilität (Vicat B ≧ 180 ° C)
sowie gegebenenfalls weitere Zusatzstoffe aus der Reihe
E) 0 - 40 Gew.-% vorzugsweise 15 bis 30 Gew.-%, anorganische Füllstoffe und/oder Verstärkungsmittel und/oder Pigmente,
F) 0 bis 30 Gew.-%, vorzugsweise 5 bis 20 Gew.-%, weitere Flammschutzmittel, wie Stickstoff-, Halogen- und/oder andere Phosphorverbindungen und
G) 0 bis 10 Gew.-%, vorzugsweise 1 bis 5 Gew.-%, Verarbeitungshilfsmittel,
H) 0 bis 20 Gew.-% übliche Zusatzmittel für Polyamide wie UV-, Licht- und Thermostabilisatoren, bekannte Schlagzähigkeitsverbesserer/Verträglichkeitsverbesserer.

2. Formmassen gemäß Anspruch 1, dadurch gekennzeichnet, daß sie als Phosphinsäureester solche der Formeln (II) und (III) enthalten

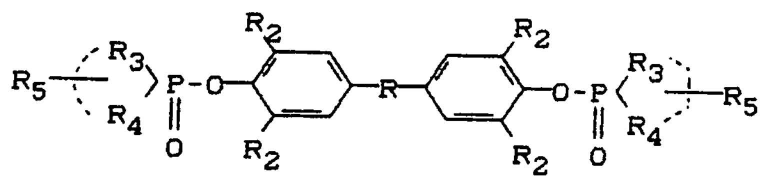 (II)

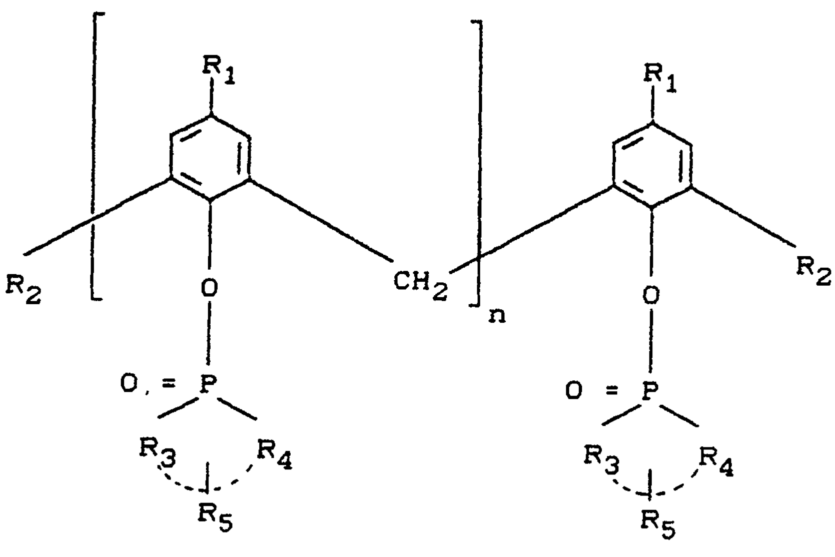 (III),

wobei
n eine ganze Zahl zwischen 2 und 15, bevorzugt zwischen 2 und 10,

R eine einfache Bindung, eine Methylen-, Isopropylidengruppe, Sauerstoff, Schwefel, eine Sulfonyl-oder Carbonylgruppe,

$R_1$ Wasserstoff, Halogen oder eine Alkylgruppe mit 1 bis 12 Kohlenstoffatomen,

$R_2$ Wasserstoff, Nalogen oder eine Alkylgruppe mit 1 bis 4 Kohlenstoffatomen,

$R_3$ und $R_4$ Methyl-, Ethyl-, Phenylgruppen oder gemeinsam die Butyliden- bzw. $R_5$-Alkyl-butylidengruppe darstellen.

3. Formmassen gemäß Ansprüchen 1 und 2, dadurch gekennzeichnet, daß sie als Phosphinsäureester solche der Formel (IV) und (V) enthalten

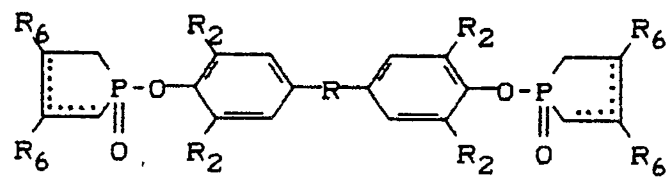

(IV)

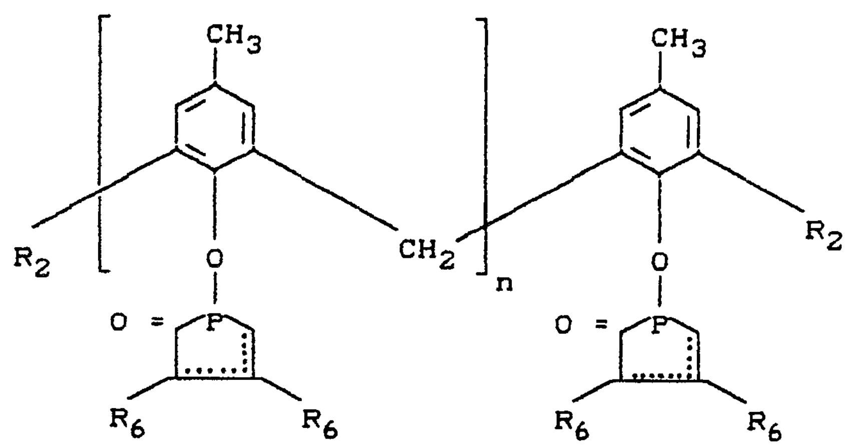

(V),

worin

n eine ganze Zahl zwischen 2 und 8 ist,

R die oben beschriebene Bedeutung hat,

$R_2$ Wasserstoff- oder Methylgruppen und

$R_6$ ebenfalls Wasserstoff oder Methylgruppen darstellen.

4. Formmassen gemäß Ansprüchen 1 bis 3, dadurch gekennzeichnet, daß als Polyamid Polyamid 6 oder Polyamid 66 eingesetzt wird.

5. Formmassen gemäß Ansprüchen 1 bis 4, dadurch gekennzeichnet, daß die Komponente A) in Mengen von 5 bis 15 Gew.-% vorliegt.

6. Formmassen gemäß Ansprüchen 1 bis 5, dadurch gekennzeichnet, daß die Komponente B) in Mengen von 0,3 bis 2,5 Gew.-% vorliegt.

7. Formmassen gemäß Ansprüchen 1 bis 6, dadurch gekennzeichnet, daß die Komponente C) in Mengen von 3-12 Gew.-% vorliegt.

8. Formmassen gemäß Ansprüche 1 bis 7, dadurch gekennzeichnet, daß sie als Thermoplasten D) mit überwiegend aromatischer Hauptkette und hoher Wärmeformbeständigkeit (Vicat B $\geqq 180^\circ C$) Polyalkylencarbonsäureester, Polysulfone, Polyethersulfone, Polyketone, Polyetherketone, Polyphenylenoxide oder Polyarylensulfide enthalten.

9. Formmassen gemäß Ansprüchen 1 bis 8, dadurch gekennzeichnet, daß sie zusätzlich Pigmente, anorganische Füllstoffe, Verstärkungsmittel wie Glasfasern, Stabilisatoren, Fließmittel, Entformungsmittel, Antistatika und/oder andere Flammschutzmittel, vorzugweise Phosphorsäureester von Novolaken, Melaminverbindungen und geeignete chlorhaltige aliphatische Verbindungen als Flammschutzmittel eingesetzt werden.

10. Verfahren zur Herstellung der Polyamidformmassen der Zusammensetzung nach Ansprüchen 1 bis 9, dadurch gekennzeichnet, daß man die Komponenten A), B), C) und D) sowie gegebenenfalls E), F), G) und

H) in bekannter Weise vermischt und bei Temperaturen von 200 °C bis 330 °C in üblichen Aggregaten schmelzcompoundiert oder schmelzextrudiert.

Europäisches Patentamt

# EUROPÄISCHER RECHERCHENBERICHT

Nummer der Anmeldung

**EP 90 11 4018**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 183 195 (BASF)<br>* Ansprüche 1-3,5; Spalte 3, Zeilen 26-28 *<br>– – – | 1-5,8-10 | C 08 K 5/5313<br>C 08 K 13/02<br>C 08 L 77/00 |
| A | EP-A-0 095 100 (BASF)<br>* Ansprüche 1,2; Seite 7, Zeilen 1-30 *; & DE-A-3219047 (Kat. D)<br>– – – | 1-4 | |
| A,P | EP-A-0 332 965 (BAYER)<br>* Ansprüche 1-7; Beispiele 1-5; Seite 4, Zeile 44 - Seite 5, Zeile 14 *<br>– – – | 1,4,7-10 | |
| A | EP-A-0 139 893 (OCCIDENTAL CHEM. CORP.)<br>* Ansprüche 1-5; Beispiele 1-7 *<br>– – – | 1,4,7-10 | |
| A | EP-A-0 122 699 (IMPERIAL CHEM. IND.)<br>* Anspruch 1; Beispiel 2 *<br>– – – – – | 1,4,7-10 | |
| | | | **RECHERCHIERTE SACHGEBIETE (Int. Cl.5)** |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| Berlin | 13 November 90 | BOEKER R.B. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument